# EUROPEAN PATENT APPLICATION

(11) **EP 2 485 182 A1**
(43) Date of publication of application: **08.08.2012**
(21) Application number: 12153965.4
(22) Date of filing: 06.02.2012
(51) Int. Cl.: G06Q 10/00

(54) **Input device, input system and computer-readable storage medium**

(30) Priority: 08.02.2011 JP 2011024497; 22.11.2011 JP 2011254900
(71) Applicant: Casio Computer Co., Ltd., Tokyo 151-8543 (JP)
(72) Inventor: Yamamoto, Harufumi, Hamura-shi, Tokyo 205-8555 (JP); Yajima, Takehiko, Hamura-shi, Tokyo 205-8555 (JP); Oe, Ryo, Hamura-shi, Tokyo 205-8555 (JP)
(74) Representative: Grünecker, Kinkeldey, Stockmair & Schwanhäusser

(57) **Abstract**

When page identification data is received from a menu device (2) that detects a menu page being viewed by a customer from among a plurality of menu pages and transmits page identification data thereof, an order terminal device (1) displays an input screen corresponding to the received page identification data from among a plurality of input screens which respectively correspond to the plurality of menu pages and assist the inputting of order data.

## Description

### BACKGROUND OF THE INVENTION

### 1. Field of the Invention

The present invention relates to an input device, an input system and a computer-readable storage medium that assist input when data is being inputted.

### 2. Description of the Related Art

In general, when a customer in a restaurant or the like orders a desired item while looking at a menu, the order-taker (staff) operates an order terminal device (order data input device) in response to the order, and after calling up and displaying an input screen that assists input including the ordered item (such as a screen showing a list of item names referenced when an order is inputted), inputs the order data using the input screen. That is, there is a conventional technology (order management system) in which an input screen showing a menu including an ordered dish is called up and displayed (refer to, for example, Japanese Patent Application Laid-Open (Kokai) Publication No. 2004-110381).

However, in the above-described conventional technology, the display size of the terminal screen is limited. Therefore, an order-taker (staff) using this terminal device has to perform a page-switching operation many times to call up and display an input screen including an ordered item. Accordingly, it takes time from when the order is received to when the inputting of the order data of the ordered item is completed, which causes confusion in the order-taking operation, such as the order-taker not being able to immediately respond to the customer's next order placed during this time.

### SUMMARY OF THE INVENTION

An object of the present invention is to provide an input device, an input system and a computer-readable storage medium that assist data input so that users can input data corresponding to a written material being viewed by another party without performing special operations.

In order to achieve the above-described object, in accordance with one aspect of the present invention, there is provided an input device comprising: a storing means for storing a plurality of input control information corresponding to a plurality of display identification information respectively assigned to a plurality of display contents capable of being displayed on a display device; a receiving means for receiving display identification information of display content currently being displayed on the display device; and a retrieving means for retrieving from the storing means input control information corresponding to the display identification information received by the receiving means; an input controlling means for performing input control based on the input control information retrieved by the retrieving means.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### BRIEF DESCRIPTION OF THE DRAWINGS

FIG. 1 is a block diagram showing an order data input system constructed in an eating and drinking establishment, such as a restaurant;
FIG. 2 is a block diagram showing basic components of an order terminal device 1 and a menu device 2;
FIG. 3A is a diagram showing an example of a state in which the menu device 2 is opened to a random page;
FIG. 3B is a diagram showing an example of a state in which the menu device 2 is opened to another random page;
FIG. 4A is a diagram showing an example of an input screen displayed on a touch display section 14 on the order terminal device 1 side in response to the menu device 2 being opened to a random page;
FTG . 4B is a diagram showing an example of an input screen displayed on the touch display section 14 on the order terminal device 1 side in response to the menu device 2 being opened to another random page;
FIG. 5 is a diagram for explaining an input screen memory M2 on the order terminal device 1;
FIG. 6 is a flowchart outlining the operation of the menu device 2;
FIG. 7 is a flowchart for explaining a characteristic operation of the order terminal device 1;
FIG. 8 is a flowchart for explaining the details of input screen data set processing (Step B8 in FIG. 7);
FIG. 9 is a flowchart of operation on an ECR 4 which is performed to set input screen data for the order terminal device 1;
FIG. 10 is a diagram showing a store network system for explaining a variation example of the present embodiment;
FIG. 11 is a block diagram showing an answer data input system constructed in a school or the like;
FIG. 12 is a block diagram showing basic components of a textbook device 5 and an answer input device 6;
FIG. 13A is a diagram showing an example of a state in which the textbook device 5 is opened to a random page;
FIG. 13B is a diagram showing an example of a state in which the textbook device 5 is opened to another random page;
FIG. 14A is a diagram showing an example of an input screen displayed on a touch display section 34 on the answer input device 6 side in response to the textbook device 5 side being opened to a random page;
FIG. 14B is a diagram showing an example of an input screen displayed on the touch display section 34 on the answer input device 6 side in response to the textbook device 5 side being opened to another random page;
FIG. 15 is a diagram for explaining an input screen memory M4 on the answer input device 6 side;
FIG. 16 is a flowchart outlining the operation of the textbook device 5;
FIG. 17 is a flowchart for explaining a characteristic operation of the answer input device 6;
FIG. 18 is a block diagram showing a response data input system constructed in a meeting room or the like;
FIG. 19 is a block diagram showing basic components of a display device 5b and a response input device 6b;
FIG. 20 is a diagram for explaining an input screen memory M4b on the response input device 6b side;
FIG. 21 is a flowchart outlining the operation of the display device 5b; and
FIG. 22 is a flowchart for explaining a characteristic operation of the response input device 6b.

### DETAILED DESCRIPTION OF THE PREFERRED EMBODIMENTS

Preferred embodiments of the present invention will hereinafter be described in detail with reference to the drawings.

### (First Embodiment)

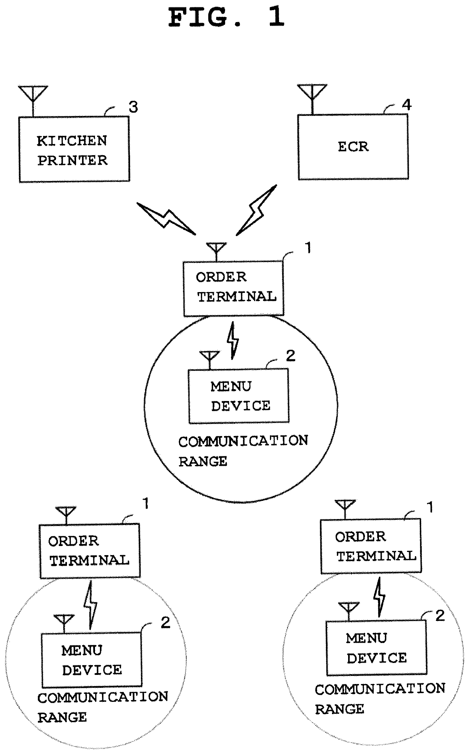

First, the first embodiment of the present invention will be described with reference to FIG. 1 to FIG. 9.

FIG. 1 is a block diagram showing an order data input system constructed in an eating and drinking establishment, such as a restaurant.

This order data input system is configured to include an order terminal device (order data input device) 1 on an order-taker (waiter or waitress) side, a menu device 2 on a customer side which is set on each table, a kitchen printer 3 on a kitchen-side, and an electronic cash register (ECR) 4 serving as a center device (external management device). Data transmission and reception between the order terminal device 1 and the menu device 2 is performed by short-range communication, and data transmission and reception between the order terminal device 1 and the kitchen printer 3 or between the order terminal device 1 and the ECR 4 is performed via an in-house communication network (local area network [LAN], not shown).

The order terminal device 1 is of a portable size (palm-size), and held by an order-taker. When an order is received from a customer, the order-taker displays on the order terminal device 1 an input screen that assists the inputting of the order data, and inputs the order data. When inputting the order data, the order-taker also inputs the table number, the number of the customers, the customer classification, and the like. The order terminal device 1 stores and manages the inputted order data in association with the table number, and transmits it to the kitchen printer 3 or the ECR 4 in response to, for example, the operation of a transfer key (not shown). Note that the transmission to the kitchen printer 3 and the ECR 4 is not necessarily required to be performed by the operation of the transfer key. For example, automatic transmission may be performed at predetermined intervals, such as every five minutes. Also note that, in the present embodiment, the transmission to the kitchen printer 3 and the ECR 4 is performed using a known technology, and therefore a detailed description thereof is omitted.

The menu device 2 is a book-like menu (printed material) provided for each table, and includes a plurality of pages (such as ten pages) on which items are printed by category. This menu device 2 has a function (various electronic components and a power supply section formed into an integrated circuit [IC] chip) for detecting a menu page being viewed by a customer from among the plurality of menu pages, and transmitting page identification data of the detected menu page, as described below. In addition, this menu device 2 uses, for example, Bluetooth (registered trademark) communication as a short-range communication function, and the communication range thereof is, for example, about 1m to 1.5m. In this instance, the menu device 2 uses a frequency that is the same as those of other menu devices 2. However, because the communication range is set to a narrow range, crosstalk due to radio wave interference that causes reduced communication speed, data reception errors, and data conversion errors can be prevented. Note that the communication range may be widened by crosstalk being prevented using a setup referred to as pairing.

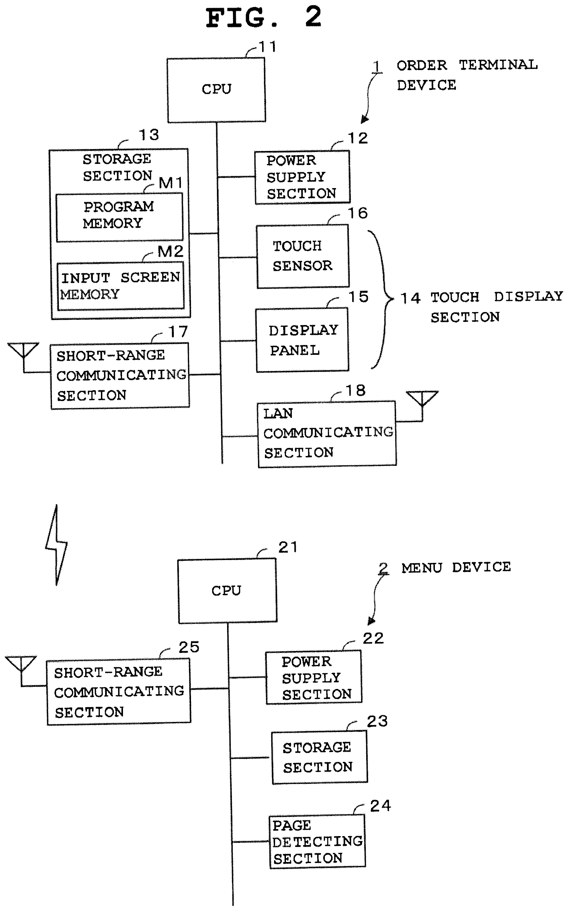

FIG. 2 is a block diagram showing basic components of the order terminal device 1 and the menu device 2.

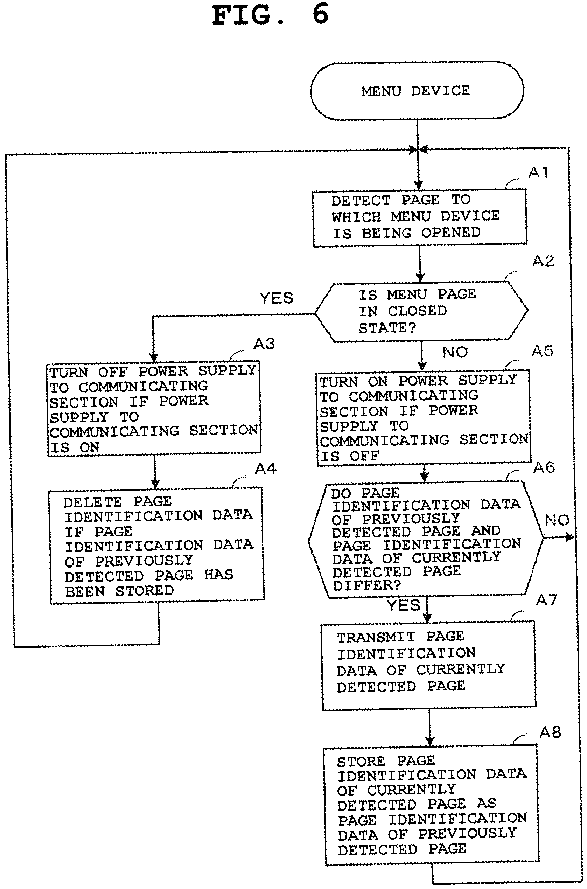

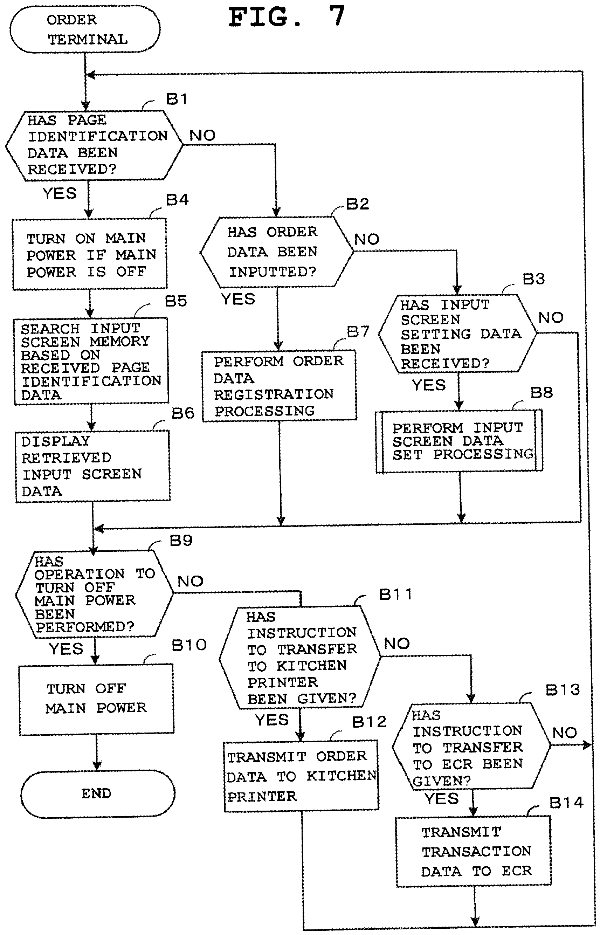

In the order terminal device 1, a central processing unit (CPU) 11 (retrieving means, input controlling means, updating means) serves as the core. The CPU 11 operates by receiving power supply from a power supply section (secondary battery) 12, and controls the overall operations of the order terminal device 1 in accordance with various programs stored in a storage section 13 (storing means). The storage section 13 is, for example, configured to include a read-only memory (ROM) , a flash memory, or the like, and has a program memory M1 and an input screen memory M2. The program memory M1 stores programs for actualizing the first embodiment based on operation procedures shown in FIG. 6 and FIG. 7 described hereafter, various applications, etc. The input screen memory M2 stores and manages input screens amounting to a plurality of pages. The storage section 13 also includes a working memory that temporarily stores various information (such as a flag and a timer) required to operate the order terminal device 1.

A touch display section 14 (display means) includes a display panel 15 and a touch sensor 16, and constitutes a touch screen that detects a point on which a touch operation is performed by a finger or the like, and inputs the coordinate data of the point. Note that, among various methods, such as a capacitance method, a resistive-film method, an electromagnetic-induction method, and a piezoelectric method, the capacitance method which has excellent lightweight, light transmission, durability, and the like is used in the touch sensor 16. However, other methods may also be used. The display panel 15 is a high-definition liquid crystal display or an organic electroluminescent (EL) display, and displays function names as software keys, an input screen that assist inputting of order data, and the like. The touch sensor 16 senses that the touch screen is being touched (approached or contacted) by sensing a change in capacitance. This transparent touch sensor 16 is arranged to be layered on the overall display surface of the display panel 15.

A short-range communicating section 17 (receiving means) performs short-range communication (such as Bluetooth [registered trademark] communication) between the order terminal device 1 and the menu device 2. When a pairing operation is performed by the order terminal device 1, the order terminal device 1 and the menu device 2 perform authentication processing to recognize the other party to which connection is made, and a communication link is established depending on the authentication result. The CPU 11 receives page identification data from the menu device 2 via the short-range communicating section 17, and after accessing the input screen memory M2 and reading out an input screen corresponding to the received page identification data from among input screens amounting to a plurality of pages stored in the input screen memory M2, switches the screen of the display panel 15 to display the input screen that has been read out. A LAN communicating section 18 (acquiring means) performs data transmission and reception between the order terminal device 1 and the kitchen printer 2 or between the order terminal device 1 and the ECR 4, via the in-house communication network (not shown).

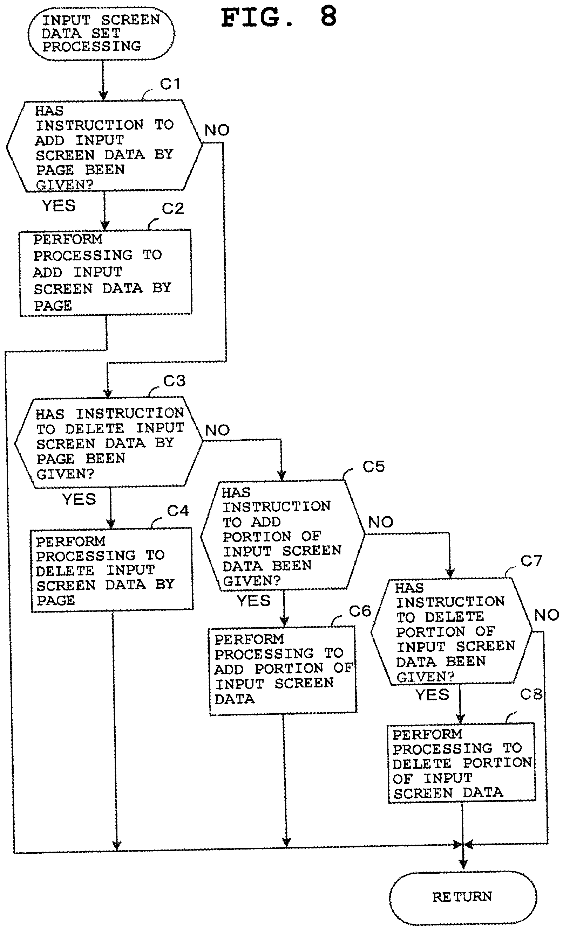

On the other hand, in the menu device 2, a CPU 21 serves as the core. The CPU 21 operates by receiving power supply from a power supply section (secondary battery) 22, and controls the overall operations of the menu device 2 in accordance with various programs stored in a storage section 23. The storage section 23 stores programs for actualizing the first embodiment based on operation procedures shown in FIG. 8 described hereafter, and the like. In addition, the storage section 23 includes a working memory that temporarily stores various information required to operate the menu device 2.

A page detecting section 24 (detecting means) is configured to magnetically detect a menu page being viewed by the customer from among a plurality of menu pages. For example, the page detecting section 24 has a magnet (not shown) embedded in a predetermined position of each page (a different position for each page) and a plurality (equal to the number of pages) of magnetic sensors (not shown) arranged in the last page. When a customer opens the menu device 1 to a random page, the page detecting section 24 senses that the magnet embedded in this page has moved away from the magnetic sensor, and thereby detects the page to which the menu device 1 is currently being opened. Note that the configuration of the page detecting section 24 is not limited to the configuration that uses magnetic sensors, and may be a configuration that uses a light sensor or a touch sensor. Moreover, the page detecting section 24 may have a configuration that uses a combination of a magnetic sensor, a light sensor, and a touch sensor. A short-range communicating section 25 (transmitting means) performs short-range communication (such as Bluetooth [registered trademark] communication) between the order terminal device 1 and the menu device 2. When the page detecting section 24 detects a menu page being viewed (opened) by the customer, the CPU 21 generates page identification data of this page, and transmits the page identification data from the short-range communicating section 25. In addition, the CPU 21 temporarily stores the page identification data in the working memory of the storage section 23.

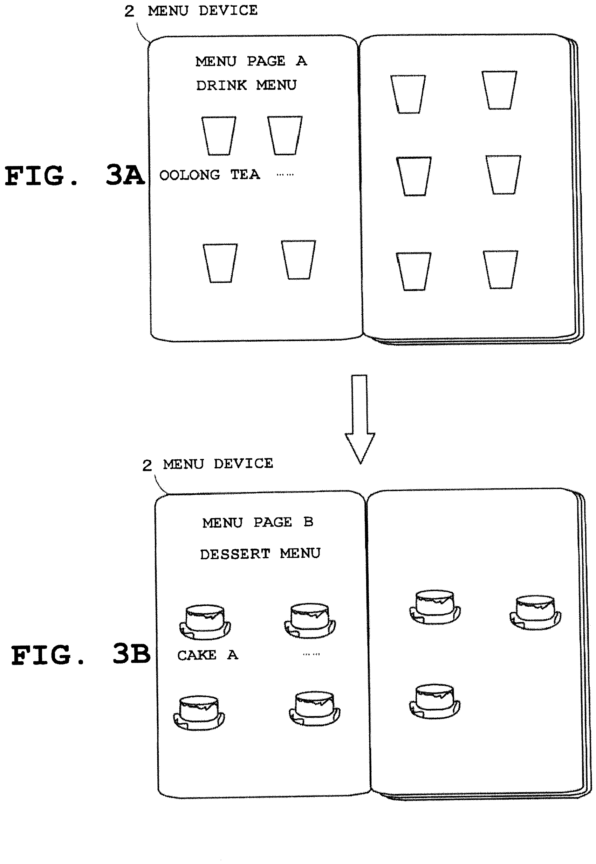

FIG. 3A and FIG. 3B are diagrams showing examples of a state in which the menu device 2 is opened to a random page.

In FIG. 3A, the contents of a drink menu is shown as the contents of a menu page A (such as a first page and a second page), and an image, a price, characteristics data, and the like are printed for each of the various items (drinks) . In FIG. 3B, the contents of a dessert menu is shown as the contents of a menu page B (such as a fifth page and a sixth page), and an image, a price, characteristics data, and the like are printed for each of the various items (desserts). When the drink menu is open as shown in FIG. 3A, the short-range communicating section 25 transmits page identification data for the first and the second pages. Also, when the dessert menu is open as shown in FIG. 3B, the short-range communicating section 25 transmits page identification data for the fifth and the sixth pages.

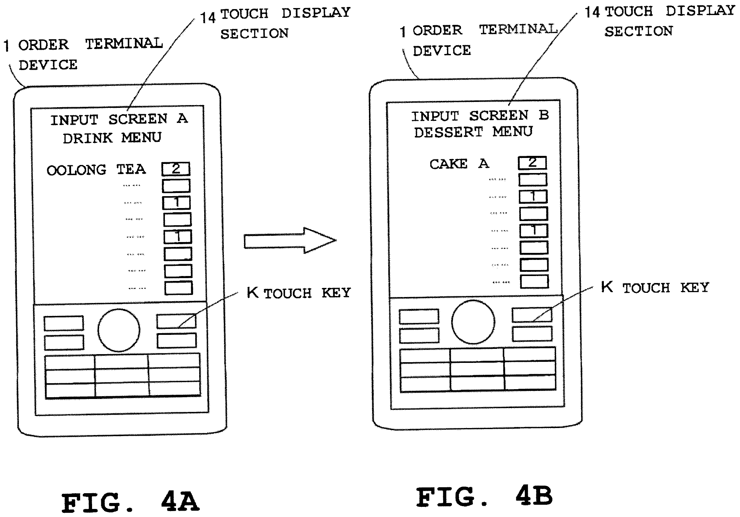

FIG. 4A and FIG. 4B are diagrams showing examples of an input screen displayed on the touch display section 14 on the order terminal device 1 side in response to a random page being opened on the menu device 2 side.

FIG. 4A shows an input screen A corresponding to a drink menu displayed on the touch display section 14 on the order terminal device 1 side when the drink menu on the menu device 2 side is opened as shown in FIG. 3A, in which the list of item names corresponding to the respective items (drinks), and input windows (input areas indicated by rectangular frames in FIG. 4A) where inputted order quantities are calculated and indicated are displayed.

As shown in FIG. 4A, on the touch display section 14, a power key for turning ON and OFF the main power, a numeric keypad for inputting the quantity of order, a registration key for finalizing and registering order data, a cancel key for canceling order data, a transfer key for giving an instruction to transfer order data, and the like are arranged and displayed as various software keys (touch keys) K, in addition to the input screen A. FIG. 4B shows an input screen B corresponding to a dessert menu displayed on the touch display section 14 on the order terminal device 1 side when the dessert menu on the menu device 2 side is opened as shown in FIG. 3B, in which the list of item names corresponding to the respective items (desserts), and input windows (input areas indicated by rectangular frames in FIG. 4B) where inputted order quantities are calculated and indicated are displayed. As shown in FIG. 4B, on the touch display section 14, the various software keys (touch keys) K described above are arranged and displayed in addition to the input screen B.

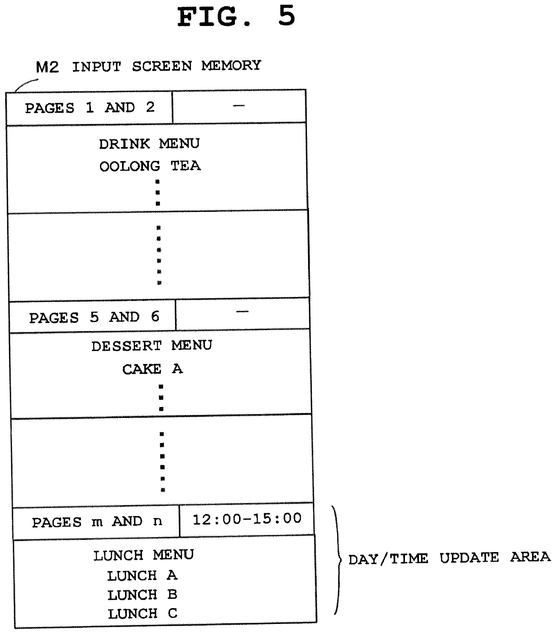

FIG. 5 is a diagram for explaining the input screen memory M2 on the order terminal device 1 side.

The input screen memory M2 stores and manages a plurality input screen data for assisting order data input, which are provided respectively corresponding to the plurality of menu pages constituting the menu device 2, and used to display the corresponding menu contents. In the input screen memory M2 of the present embodiment, item data (item names such as "oolong tea") for the respective drinks have been stored as input screen data corresponding to the first and the second menu pages (drink menu) shown in FIG. 3A.

Also, in the input screen memory M2, item data (item names such as "cake A") for the respective desserts have been stored as input screen data corresponding to the fifth and the sixth menu pages (dessert menu) shown in FIG. 3B. Moreover, item data (item names such as "lunch A", "lunch B", and "lunch C") for specials have been stored as input screen data corresponding to the m-th and the n-th menu pages (lunch menu). The input screen data corresponding to the m-th page and the n-th page includes, for example, an area (day/time update area) for storing data that are updated by page unit every day or according to the predetermined time of day, in which item data (item names) for daily special menus or specific-time special menus, such as breakfast specials and lunch specials, are stored.

Next, the operational concept of the order data input system according to the first embodiment will be described with reference to the flowcharts in FIG. 6 to FIG. 9. Here, each function described in the flowcharts is stored in a readable program code format, and operations based on these program codes are sequentially performed. Also, operations based on the above-described program codes transmitted over a transmission medium such as a network can also be sequentially performed. That is, the unique operations of the present embodiment can be performed using programs and data supplied from an outside source over a transmission medium, in addition to a recording medium.

FIG. 6 is a flowchart outlining the operation of the menu device 2.

First, the CPU 21 of the menu device 2 acquires a result outputted from the page detecting section 24, and detects the page to which the menu device 2 is currently being opened (viewed) (Step A1) . When the menu device 2 is in a closed state (YES at Step A2), the CPU 21 judges that the menu device 2 is not being used, and accordingly proceeds to the subsequent Step A3. At Step A3, the CPU 21 turns OFF the power supply to the short-range communicating section 25 if it is ON. In addition, if a previously detected page identification data has been temporarily stored in the working memory of the storage section 23, the CPU 21 deletes the page identification data as unnecessary data (Step A4), and returns to Step A1.

At Step A2, when the menu device 2 is in an opened state (NO at Step A2), the CPU 21 judges that the menu device 2 is being used, and accordingly proceeds to the subsequent Step A5. At Step A5, the CPU 21 turns ON the power supply to the short-range communicating section 25 if it is OFF. Then, the CPU 21 considers the page to which the menu device 2 is currently being opened as a currently detected page, and generates page identification data thereof. In addition, the CPU 21 compares the page identification data of the currently detected page with the page identification data of the previously detected page which has been temporarily stored in the working memory of the storage section 23, and judges whether or not these page identification data differ (Step A6). When judged that these page identification data are the same (NO at Step A6), the CPU 21 returns to Step A1, disregarding the currently detected page. Conversely, when judged that these page identification data differ (YES at Step A6), the CPU 21 transmits the page identification data of the currently detected page from the short-range communicating section 25 (Step A7), and temporarily stores it in the working memory of the storage section 23, as the page identification data of a previously detected page (Step A8) . Then, the CPU 21 returns to Step A1, and hereafter repeats the same operations.

FIG. 7 is a flowchart for explaining a characteristic operation of the order terminal device 1.

First, the CPU 11 judges whether or not page identification data has been received from the menu device 2 (Step B1) , judges whether or not an operation to input order data has been performed (Step B2), judges whether or not input screen setting data has been received (Step B3), judges whether or not an operation to turn OFF the main power has been performed (Step B9), judges whether or not an instruction to transfer registered order data to the kitchen printer 3 has been given (Step B11), and judges whether or not an instruction to transfer registered order data to the ECR 4 has been given (Step B13) . Until any one of these operations, instructions, and data receptions is detected, the CPU 11 keeps returning to Step B1 and remains in a standby mode.

At Step B1, when judged that page identification data has been received from the menu device 2 (YES at Step B1), the CPU 11 proceeds to Step B4 . At Step B4 , the CPU 11 turns ON the main power if it is OFF. Then, the CPU 11 searches the input screen memory M2 based on the received page information data (Step B5), and after reading out input screen data corresponding to the page identification data, displays it on the touch display section 14 (Step B6). As a result, the list of each item name is displayed on the input screen, as shown in FIG. 4A or FIG. 4B.

At Step B2, when judged that an operation to input order data has been performed (YES at Step B2), the CPU 11 proceeds to processing for registering the order data (Step S7). That is, when inputting order data by operating the touch keys on the touch display section 14, the order-taker inputs the order data using the input screen displayed on the touch display section 14. Specifically, the order-taker selects the ordered item by touching its name from among the item names shown in the list displayed on the input screen, and inputs the quantity of the ordered item by operating the numeric pad. As a result, the inputted quantity is calculated and indicated in the input window (the input area indicated by the rectangular frame in FIG. 4A and FIG. 4B) for the ordered item name on the input screen. Note that, instead of the configuration in which the quantity of an ordered item is inputted by the operation of the numeric pad, a configuration may be applied in which the quantity of an ordered item is inputted by the area of the ordered item being touched a number of times corresponding to the quantity. When order data is inputted as described above, the processing for storing and registering order data in the storage section 23 is performed.

At Step B11, when judged that the transfer key has been operated for giving an instruction to transfer registered order data to the kitchen printer 3 (YES at Step B11), the CPU 11 performs processing for sequentially reading out each order data of a single transaction (single table) registered in the storage section 23, and transmitting them to the kitchen printer 3 from the LAN communicating section 18 (Step B12). Similarly, when judged that the transfer key has been operated for giving an instruction to transfer registered order data (data of a single transaction) to the ECR 4 (YES at Step B13), the CPU 11 performs processing for reading out order data of a single transaction (single table) registered in the storage section 23, and transmitting the order data to the ECR 4 from the LAN communicating section 18 (Step B14). At Step B9, when judged that an operation to turn OFF the main power has been performed (YES at Step B9), the CPU 11 turns OFF the main power (Step B10), and exits this flow. However, when judged at Step B3 that input screen setting data has been received from the ECR 4 via the LAN communicating section 18 (YES at Step B3), the CPU 11 proceeds to input screen data set processing described hereafter (Step B8).

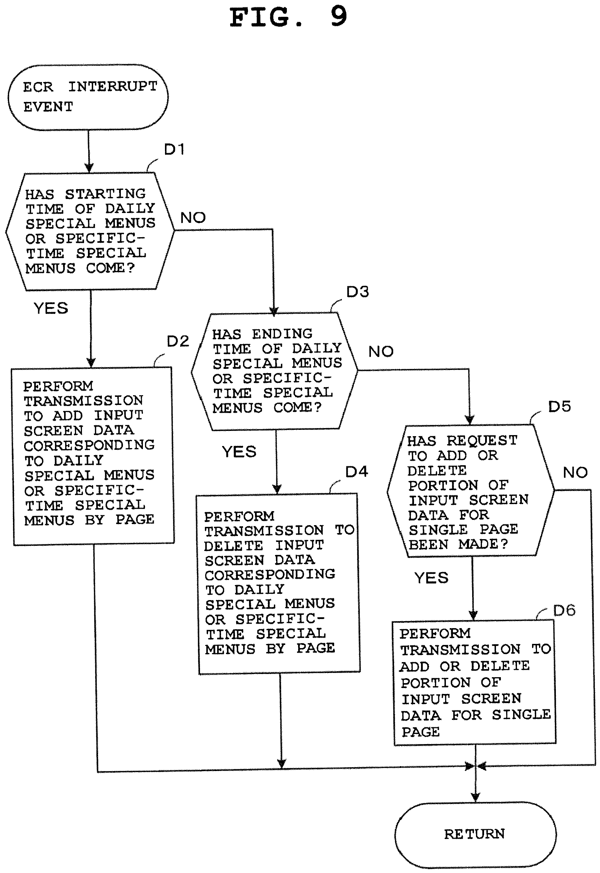

FIG. 8 is a flowchart for explaining the details of the input screen data set processing (Step B8 in FIG. 7), and FIG. 9 is a flowchart of operation on the ECR 4 which is initiated in response to an interrupt event that is generated every predetermined amount of time (such as at one-minute intervals), and sets input screen data for the order terminal device 1.

First, the operation on the ECR 4 side will be described. The ECR 4 judges whether or not the starting time of daily special menus or specific-time special menus, such as breakfast specials and lunch specials, has come (Step D1 in FIG. 9). When judged that the starting time has come (YES at Step D1), the ECR 4 transmits input screen data corresponding to the daily special menus or specific-time special menus to the order terminal device 1 via the in-house communication network, and adds them thereto by page unit (Step D2).

Then, the ECR 4 judges whether or not the ending time of the daily special menus or specific-time special menus has come (Step D3). When judged that the ending time has come (YES at Step D3), the ECR 4 transmits an instruction to delete the input screen data corresponding to the daily special menus or specific-time special menus by page to the order terminal device 1 via the in-house communication network (Step D4), Also, when a request to add or delete a portion of input screen data for a single page is made (YES at Step D5), the ECR 4 transmits an instruction to add or delete a portion of input screen data to the order terminal device 1 via the in-house communication network (Step D6).

When the order terminal device 1 side receives an instruction to add input screen data by page from the ECR 4 (YES at Step C1 in FIG. 8), the CPU 11 performs processing to add the received input screen data by page (Step C2). In this instance, the CPU 11 adds and registers the received input screen data in the day/time update area of the input screen memory M2 by page. On the other hand, when the order terminal device 1 side receives an instruction to delete input screen data by page from the ECR 4 (YES at Step C3), the CPU 11 performs processing to delete the input screen data of a relevant page from the day/time update area of the input screen memory M2 (Step C4). Also, when the order terminal device 1 side receives an instruction to add a portion of input screen data from the ECR 4 (YES at Step C5), the CPU 11 adds a portion of input screen data to a relevant input screen (Step C6). When the order terminal device 1 side receives an instruction to delete a portion of input screen data from the ECR 4 (YES at Step C7), the CPU 11 deletes a portion of relevant input screen data (Step C8). Accordingly, the contents of the input screen memory M2 change depending on the instruction from the ECR 4.

As described above, in the first embodiment, when the order terminal device 1 receives page identification data from the menu device 2 that detects a menu page being viewed by a customer from among a plurality of menu pages and transmits the page identification data of the detected page, the order terminal device 1 displays an input screen corresponding to the received page identification data, from among input screens which correspond to a plurality of menu pages and assist the inputting of order data. Accordingly, when inputting order data, an order-taker who has received the order from a customer can call up an input screen which corresponds to a menu page being viewed on the customer side and assists the inputting of the order data, without performing a special operation, whereby the order-taking operation is made smoother. That is, the order-taker (staff) is no longer required to perform a page-switching operation many times to call up and display an input screen including an ordered item, as was required in the past. As a result, the time required from when an order is received to when the order data of the ordered item is inputted can be significantly shortened, whereby client service is enhanced and significant advantages are brought to the store side.

Also, the order terminal device 1 references the input screen memory M2 storing a plurality of input screen data which are provided corresponding to menu pages on the menu device 2 and used to display corresponding menu contents, and after reading out input screen data corresponding to received page identification data from the input screen memory M2, displays it. As a result, compared to a configuration where input screen data is received via a network, an input screen corresponding to a menu page being viewed on the customer side can be acquired in a shorter time, and the time required from when an order is received to when the order data of the ordered item is inputted can be shortened.

Moreover, the order terminal device 1 receives input screen data from the ECR 4 and updates the contents of the input screen memory M2. Therefore, input screen data can be acquired and updated in advance, and changes to input screen data can be appropriately supported.

Furthermore, the order terminal device 1 updates the contents of the input screen memory M2 according to the time of day. Therefore, specific-time special menus that differ according to the time of day can be supported, and the data thereof can be acquired and updated in advance.

Still further, in the configuration of the order terminal device 1, an order-taker who has received an order from a customer displays an input screen that assists the inputting of the order data, and inputs the order data, using the touch display section 14 in which the touch sensor 16 is layered on the display panel 15. Therefore, the order-taker can easily and intuitively input order data, whereby input errors of order data can be reduced.

Yet still further, the menu device 2 is a book-like printed material constituted by a plurality of menu pages, and the CPU 21, the storage section 23, the page detecting section 24, and the short-range communicating section 25 are mounted therein in the form of an IC chip. Accordingly, existing printed materials can be used as is, by the IC chip being mounted therein.

Yet still further, the page to which the menu device 2 is currently opened is detected through the use of the page detecting section 24 and magnetic sensors of the menu device 2. Therefore, appropriate page detection can be performed without being influenced by external sources, such as temperature and heat.

Note that, in the above-described first embodiment, although input screen data is transmitted and received between the order terminal device 1 and the menu device 2 by short-range communication, the order terminal device 1 may receive input screen data from an external management device using the in-house communication network.

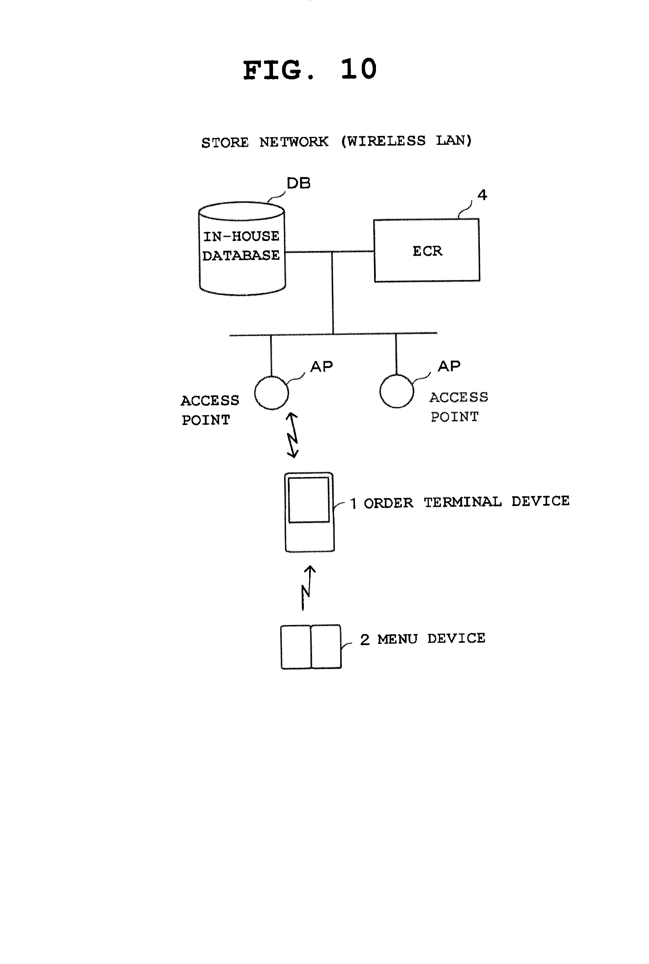

FIG. 10 is a block diagram showing a store network system (wireless LAN) in an instance where input screen data is transmitted and received using the in-house communication network.

The order terminal device 1 can be connected to the ECR 4 via access points AP constituting the store network system (wireless LAN). When communication with the menu device 2 is established during pairing through short-range communication, the order terminal device 1 receives page identification data from the menu device 2. When receiving the page identification data, the order terminal device 1 also receives menu identification data that identifies the menu device 2. The order terminal device 1 then transmits the page identification data, the menu identification data, and terminal identification data identifying the order terminal device 1 itself to the ECR 4 via the nearest access point AP.

Next, the ECR 4 searches an in-house database DB based on the page identification data received from the order terminal device 1. This in-house database DB stores and manages input screen data corresponding to a plurality of menu pages constituting the menu device 2. Then, the ECR 4 reads out input screen data corresponding to the page identification data from the in-house database DB, and transmits the input screen data to the order terminal device 1 indicated by the received terminal identification data. When the input screen data is received from the ECR 4, the order terminal device 1 displays it on the touch display section 14. Hereafter, the above-described operations are repeated until the established communication between the order terminal device 1 and the menu device 2 is terminated in response to an instruction to end the order.

In the above-described first embodiment, Bluetooth communication is used as the short-range communication between the order terminal device 1 and the menu device 2. However, the communication method is not limited thereto, and short-range communication using infrared communication, non-contact IC card communication, and the like may be used. In addition, the communication between the order terminal device 1 and the menu device 2 is not limited to short-range communication, and the in-house communication network may be used.

Also, in the first embodiment, a configuration has been adopted that uses the touch display section 14 in which the touch sensor 16 is layered on the display panel 15. However, a configuration may be adopted where push-button-type stroke keys are used as an input section for inputting order data, and a display section is provided near this input section.

Moreover, in the first embodiment, the menu device 2 is a book-like printed material which is constituted by a plurality of menu pages and has various electronic components mounted therein in the form of an IC chip. However, the menu device 2 may be an electronic-book-type electronic device where various menus are switched and displayed on the display section.

Furthermore, in the first embodiment, the page to which the menu device 2 is currently being opened is detected through the use of the page detecting section 24 and the magnetic sensors of the menu device 2. However, the present invention is not limited thereto, and a light sensor or a contact sensor may be used.

Still further, in the first embodiment, the present invention has been applied to an instance where order data is inputted in an eating and drinking establishment, such as a restaurant. However, the location is not limited to an eating and drinking establishment.

Yet still further, the "device" or the "section" described in the above-described embodiment is not required to be in a single housing, and may be separated into a plurality of housings by function. In addition, the steps in the above-described flowcharts are not required to be processed in time series, and may be processed in parallel, or individually and independently.

### (Second Embodiment)

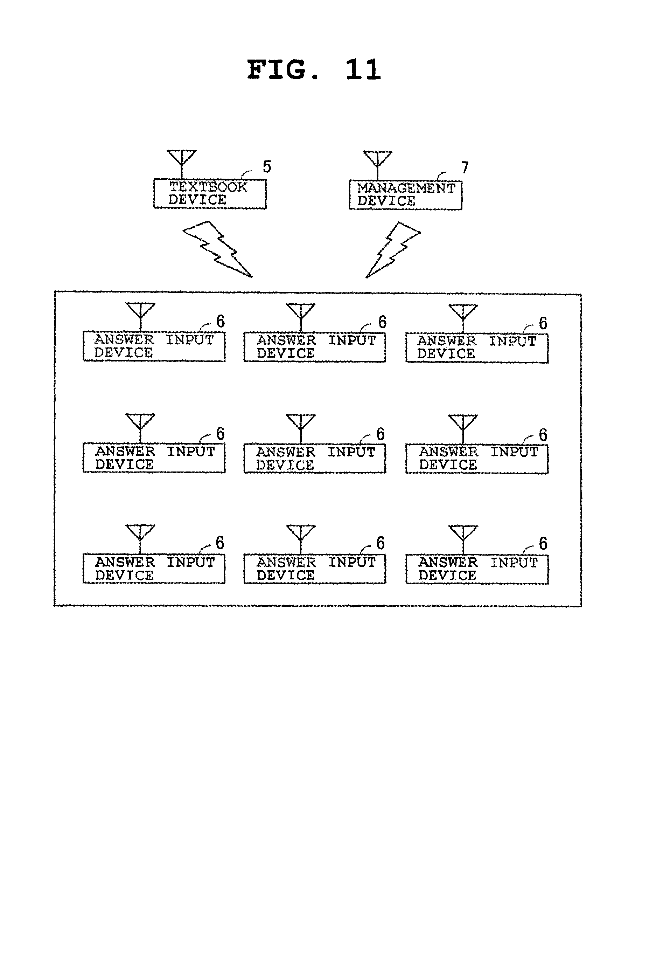

A second embodiment of the present invention will be described with reference to FIG. 11 to FIG. 17.

The second embodiment is an answer data input system constructed for school education purposes and the like.

This answer data input system includes a textbook device 5 on a questioner (teacher) side, an answer input device 6 on an answerer (student) side which is set on each desk, and a management device 7 that manages answer data from each answer input device 6. Data transmissions and receptions between the textbook device 5 and each answer input device 6, and between the answer input device 6 and the management device 7 are performed over an in-house communication network (LAN, not shown).

The answer input device 6 is set on each answerer's desk. When a question is received from the questioner, the answerer displays on the answer input device 6 an input screen that assists the inputting of answer data, and inputs answer data for the question. When inputting the answer data, the answerer also inputs the desk number or the like. The answer input data 6 stores and manages the inputted answer data in association with the desk number, and transmits it to the management device 7 in response to, for example, the operation of a transfer key (not shown). Note that, in the present embodiment, the transmission to the management device 7 is performed using a known technology, and therefore a detailed description thereof is omitted.

The textbook device 5 is a book-like textbook (printed material) provided to a questioner, and includes a plurality of pages (such as 100 pages). This textbook device 5 has a function (various electronic components and a power supply section formed into an IC chip) for detecting a page from which the questioner gives a question from among the plurality of pages, and transmitting page identification data of the detected page, as described below. Note that, in the present embodiment, the transmission to the answer input device 6 is performed using a known technology, and therefore a detailed description thereof is omitted.

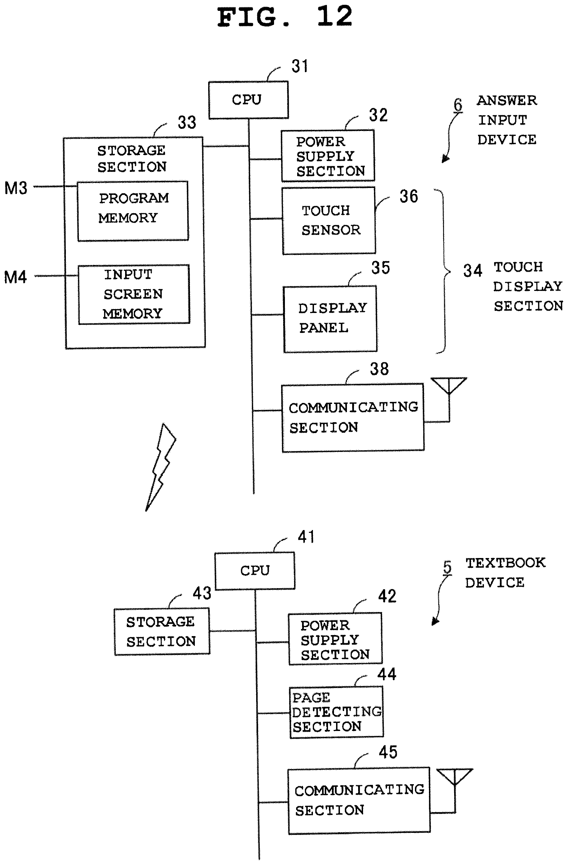

FIG. 12 is a block diagram showing basic components of the answer input device 6 and the textbook device 5.

A page detecting section 44 is (detecting means) configured to magnetically detect a page from which a questioner is giving a question, from among the plural pages of the textbook device 5. A storage section 43 stores a page to which the textbook device 5 is opened when a questioner is giving a question, as a question page. Note that the other components are the same as those of the first embodiment, and therefore explanations thereof are omitted.

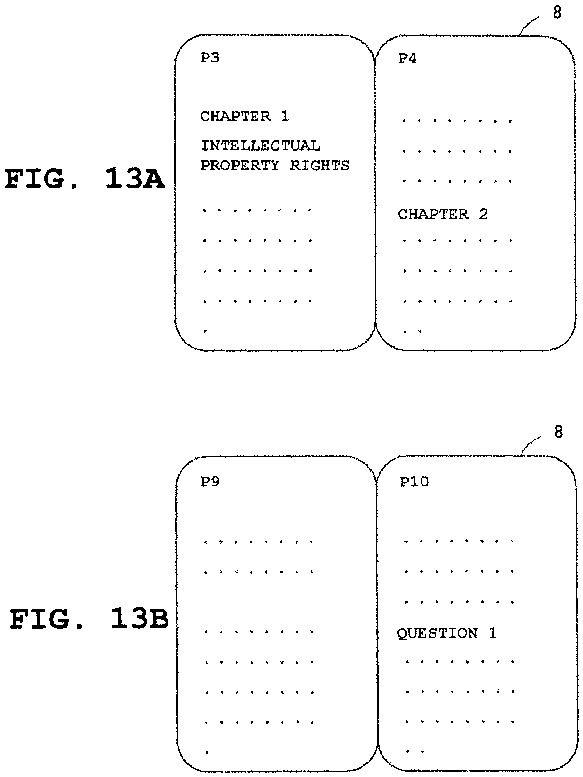

FIG. 13A and FIG. 13B are diagrams showing examples of a state in which the textbook device 5 is opened to a random page.

In FIG. 13A, contents related to intellectual property rights are shown as the contents of page A (third page and fourth page) of the textbook device 5. In FIG. 13B, the contents of a question given by a questioner are shown as the contents of page B (ninth page and tenth page) of the textbook device 5. In the second embodiment, a page including a question being given by a questioner such as that shown in FIG. 13B is stored in the storage section 43 as a question page. When the textbook device 5 is opened to this question page, a communicating section 45 (transmitting means) transmits page identification data thereof.

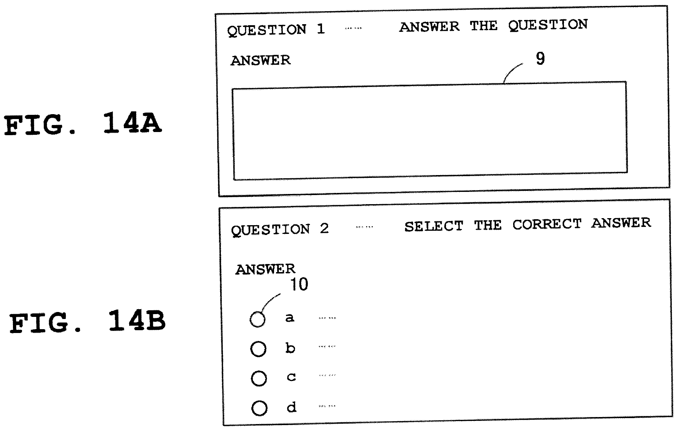

FIG. 14A and FIG. 14B are diagrams showing examples of an input screen displayed on the touch display section 34 on the answer input device 6 side in response to the opening of the textbook device 5 to a page including a question.

FIG. 14A is a diagram showing an input screen displayed when a question on a page to which the textbook device 5 is opened is an open-response question such as that shown on the tenth page in FIG. 13B. In this instance, the answerer writes the answer within an answer frame 9.

FIG. 14B is a diagram showing an input screen displayed when a question on a page to which the textbook device 5 is opened is a multiple-choice question. In this instance, the answerer answers the question by selecting a selection frame 10.

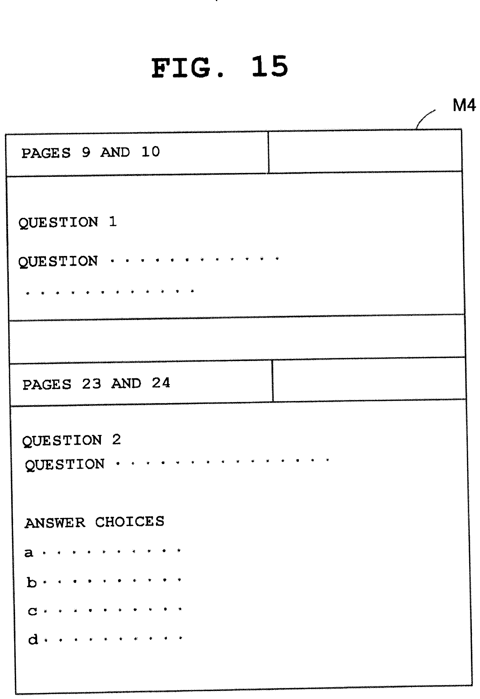

FIG. 15 is a diagram for explaining an input screen memory M4 on the answer input device 5 side.

The input screen memory M4 stores and manages a plurality of input screen data that assist the inputting of answer data, which are provided corresponding to question pages stored in the storage section 43, or in other words, pages including questions among the plurality of pages constituting the textbook device 5, and used to display the contents of a corresponding question. In this instance, as input screen data corresponding to the open-response question shown in FIG. 13B and FIG. 14A, the contents of the question is stored in the input screen memory M4 in association with the page numbers.

In addition, as input screen data corresponding to the question shown in FIG. 14B, the contents of the question and answer choices are stored in the input screen memory M4 in association with the page numbers.

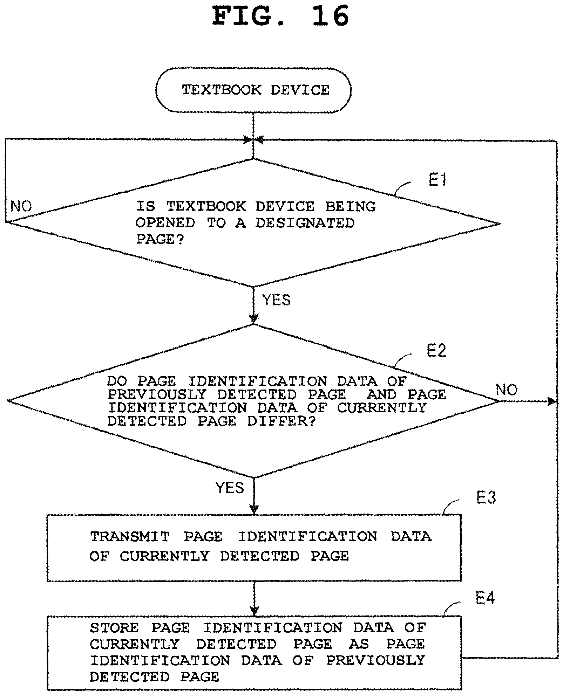

Next, the operational concept of the answer data input system according to the second embodiment will be described with reference to the flowcharts in FIG. 16 to FIG. 17. Here, each function described in the flowcharts is stored in a readable program code format as in the case of the first embodiment, and operations based on these program codes are sequentially performed. Also, operations based on the above-described program codes transmitted over a transmission medium such as a network can also be sequentially performed. That is, the unique operations of the present embodiment can be performed using programs and data supplied from an outside source over a transmission medium, in addition to a recording medium.

FIG. 16 is a flowchart outlining the operation of the textbook device 5.

First, a CPU 41 of the textbook device 5 acquires a result outputted from the page detecting section 44, and judges whether or not the textbook device 5 is currently being opened to a question page stored in the storage section 43 (whether or not a question page is being viewed) (Step E1) . As described above, stored question pages are pages including questions in the second embodiment. Then, when judged that the textbook device 5 is not currently being opened to a stored question page (NO at Step E1), the CPU 41 repeats the judgment until the textbook device 5 is opened to a stored question page.

When judged at Step E1 that the textbook device 5 is currently being opened to a stored question page (YES at Step E1), the CPU 41 proceeds to the subsequent Step E2. At Step E2, the CPU 41 considers the page to which the textbook device 5 is currently being opened as a currently detected page, and generates page identification data thereof. In addition, the CPU 41 compares the page identification data of the currently detected page with the page identification data of the previously detected page which has been temporarily stored in the working memory of the storage section 43, and judges whether or not these page identification data differ (Step E2). When judged that these page identification data are the same (NO at Step E2), the CPU 41 returns to Step E1, disregarding the currently detected page. Conversely, when judged that these page identification data differ (YES at Step E2), the CPU 41 transmits the page identification data of the currently detected page from the communicating section 45 (Step E3), and temporarily stores it in the working memory of the storage section 43, as the page identification data of a previously detected page (Step E4). Then, the CPU 41 returns to Step E1, and hereafter repeats the same operations.

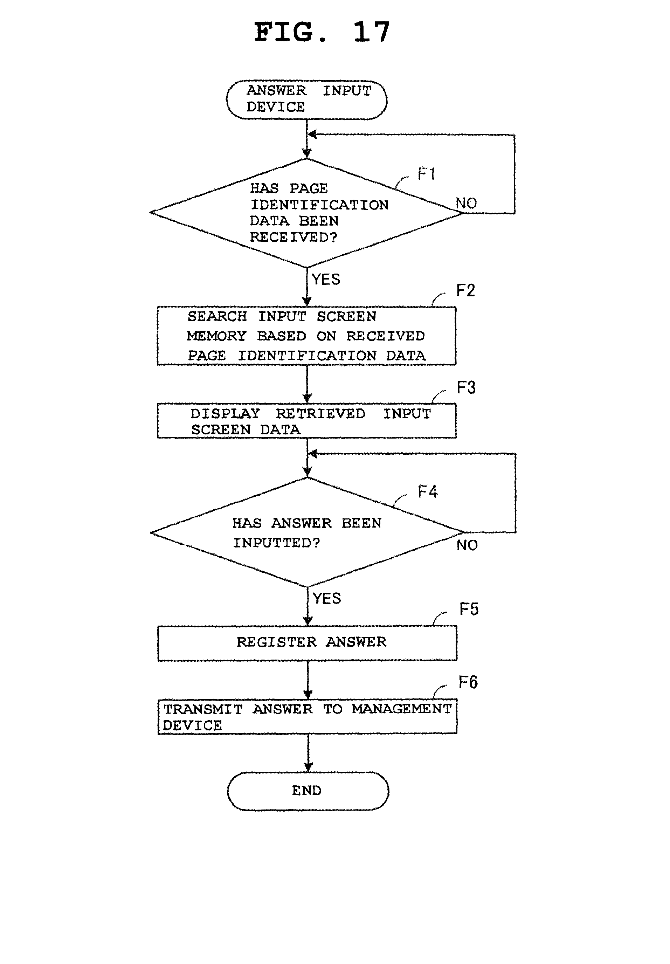

FIG. 17 is a flowchart for explaining a characteristic operation of the answer input device 6.

First, a CPU 31 (retrieving means, input controlling means) judges whether or not page identification data has been received from the textbook device 5 (Step F1). When judged at Step F1 that page identification data has not been received (NO at Step F1), the CPU 31 returns to Step F1. Then, until the reception of page identification data is detected, the CPU 31 remains in a standby mode.

Conversely, when judged that page identification data has been received from the textbook device 5 (YES at Step F1), the CPU 31 proceeds to Step F2, and searches the input screen memory M4 based on the received page information data (Step F2) . Next, the CPU 31 reads out input screen data corresponding to the page identification data, and displays it on a touch display section 34 (display means) (Step F3). As a result, an input screen is displayed which includes a question written on the page to which the textbook device 5 is currently being opened and an answer frame therefor, as shown in FIG. 14A or FIG. 14B.

When the question is displayed on the touch display section 34 at Step F3, the answerer starts to answer the question. In a case where the screen being displayed is that shown in FIG. 14A, the answerer writes the answer in the answer frame 9. In a case where the screen being displayed is that shown in FIG. 14B, the answerer answers the question by selecting one of the answer choices in the answer frame 10.

When the answer is inputted (YES at Step F4), the CPU 31 registers the answer data thereof (Step F6), and transmits the registered answer data to the management device 7 (Step F6). Accordingly, this processing in the second embodiment ends.

Note that, although question pages stored in the storage section 43 are pages including questions in the second embodiment, the present invention is not limited thereto. For example, a certain page of the textbook device 5 which is related to a question that the questioner wants to give may be detected.

Also note that, although questions being given are those on pages stored in the storage section 43 in the second embodiment, the present invention is not limited thereto. For example, the questions may be those written by the questioner.

### (Third Embodiment)

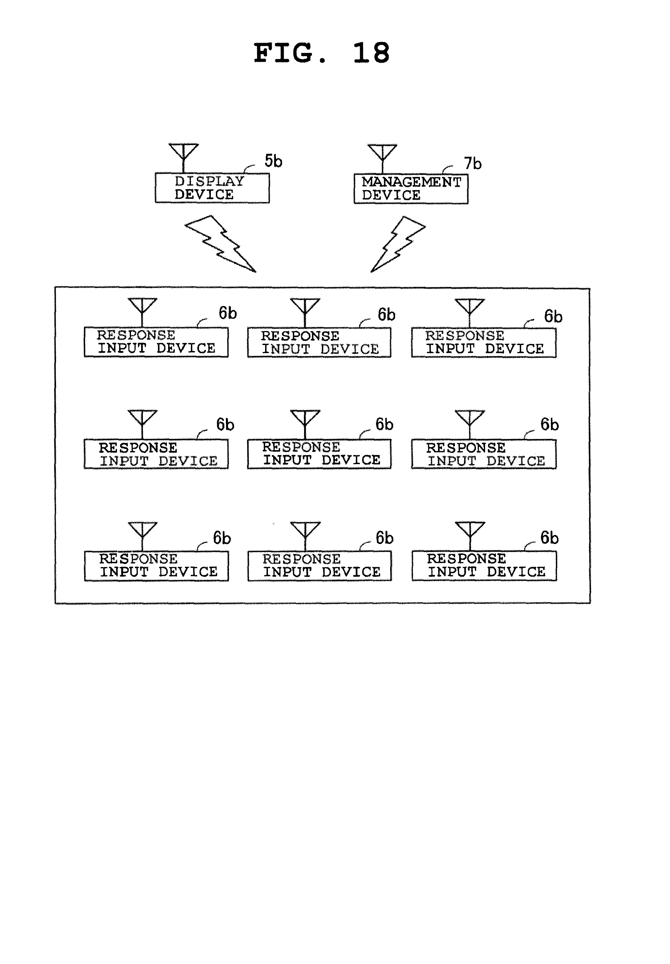

Next, a third embodiment of the present invention will be described with reference to FIG. 18 to FIG. 22.

The third embodiment is a response data input system constructed in a meeting room or the like. Note that explanations of sections that are the same as those of the first embodiment and the second embodiment will be omitted.

This response data input system includes a response input device 6b on a responder (participant of a meeting or the like) side which is set on each table, a display device 5b on a questioner (chairperson or the like) side, and a management device 7b that manages response data from each response input device 6b. Data transmissions and receptions between the display device 5b and each response input device 6b, and between the response input device 6b and the management device 7b are performed over an in-house communication network (LAN, not shown).

The response input device 6b is set on each responder's table. When a question is received from the questioner, the responder inputs response data for the question by pressing a response switch 36b (selecting means). The response input device 6b stores and manages the inputted response data, and transmits it to the management device 7b in response to, for example, the operation of a transfer key (not shown). Note that, in the present embodiment, the transmission to the management device 7b is performed using a known technology, and therefore a detailed description thereof is omitted.

The display device 5b is, for example, a personal computer (PC) or the like used for a questioner's presentation. This display device 5b has a function for detecting a document from which the questioner gives a question to the participants from among a plurality of documents, and transmitting document identification data of the detected document. Note that, in the present embodiment, the transmission to the response input device 6b is performed using a known technology, and therefore a detailed description thereof is omitted.

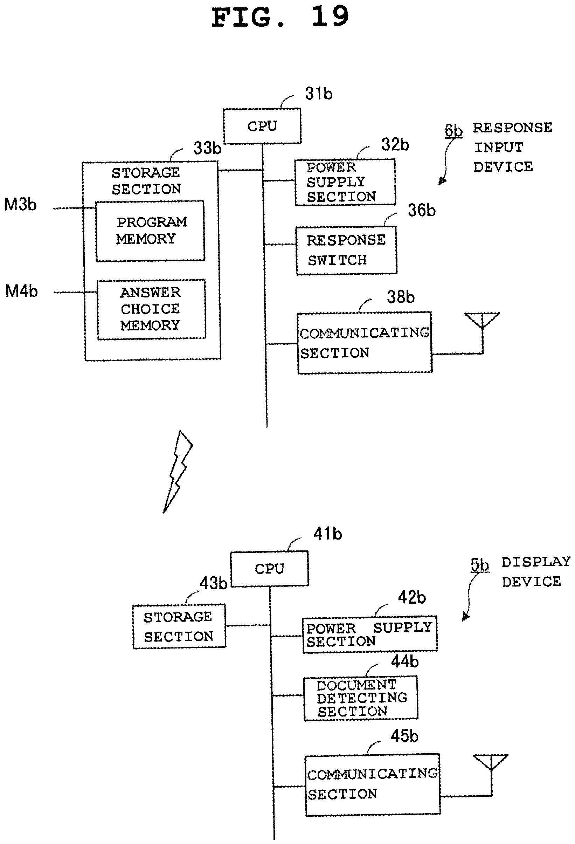

FIG. 19 is a block diagram showing basic components of the display device 5b and the response input device 6b.

The response switch 36b, which includes a plurality of switches, enables switches to be used based on response choices for a question, and receives a response from the responder. For example, four switches (a to d) are provided in advance. Then, when there are two response choices for a question, the response switch 36b enables two switches (a and b) among the four switches (a to d), and receives a response from the responder. Note that the responder may be notified of the enabled switches by these switches being lit. Also note that the number of the switches included in the response switches 4b is not limited to four.

A document detecting section 44b (detecting means) detects a document prepared by the questioner to give a question to the responder. Note that the document to be detected may be a specific page of a presentation document, or may be the presentation document itself.

A storage section 43b stores, as a question document, a document or a specific page of a document which are displayed when the questioner wants to ask a question.

The other components are the same as those of the first embodiment or the second embodiment, and therefore explanations thereof are omitted.

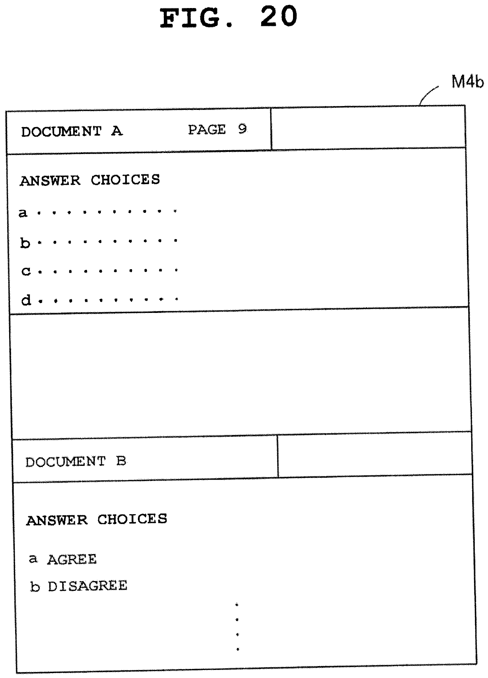

FIG. 20 is a diagram for explaining an answer choice memory M4b on the response input device 6b side.

The answer choice memory M4b stores and manages answer choices which are provided corresponding to a question document stored in the storage section 43b, or in other words, to a page of a document or the document itself that includes a question, among documents to be displayed by the display device 5b. In this instance, answer choices corresponding to a question on the ninth page of a document A are stored in the answer choice memory M4b in association with the document A.

Also, answer choices corresponding to a document B are stored in the answer choice memory M4b in association with the document B.

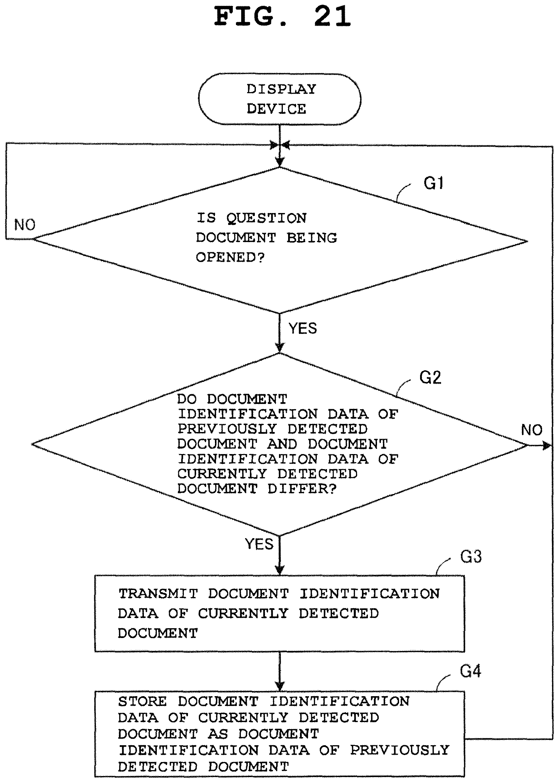

Next, the operational concept of the response data input system according to the third embodiment will be described with reference to the flowcharts in FIG. 21 to FIG. 22. Here, each function described in the flowcharts is stored in a readable program code format as in the case of the first embodiment or the second embodiment, and operations based on these program codes are sequentially performed. Also, operations based on the above-described program codes transmitted over a transmission medium such as a network can also be sequentially performed. That is, the unique operations of the present embodiment can be performed using programs and data supplied from an outside source over a transmission medium, in addition to a recording medium.

FIG. 21 is a flowchart outlining the operation of the display device 5.

First, a CPU 41b of the display device 5 acquires a result outputted from the document detecting section 44b, and judges whether or not a question document stored in the storage section 43b is currently being opened (Step G1). When judged that a question document is not currently being opened (NO at Step G1), the CPU 41b repeats the judgment until a question document is opened.

When judged at Step G1 that a question document is currently being opened (YES at Step G1), the CPU 41b proceeds to subsequent Step G2. At Step G2, the CPU 41b determines the currently opened document as a currently detected document, and generates document identification data thereof. In addition, the CPU 41b compares the document identification data of the currently detected document with the document identification data of the previously detected document which has been temporarily stored in the working memory of the storage section 43b, and judges whether or not these document identification data differ (Step G2). When judged that these document identification data are the same (NO at Step G2), the CPU 41b returns to Step G1, disregarding the currently detected document. Conversely, when judged that these document identification data differ (YES at Step G2), the CPU 41b transmits the document identification data of the currently detected document from a communicating section 45b (transmitting means) (Step G3), and temporarily stores it in the working memory of the storage section 43, as the document identification data of a previously detected document (Step G4) . Then, the CPU 41b returns to Step G1, and hereafter repeats the same operations.

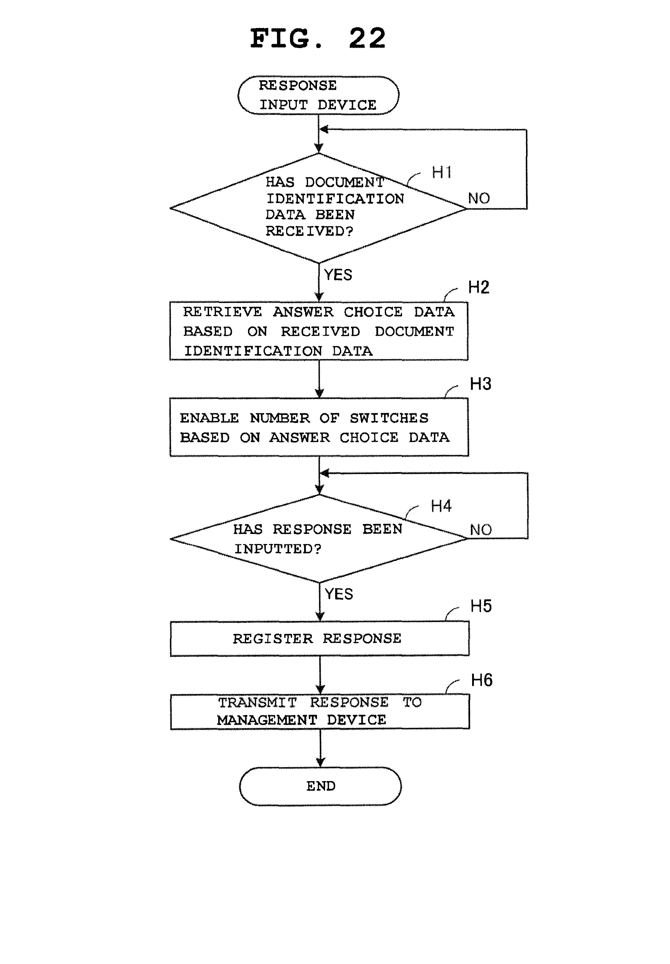

FIG. 22 is a flowchart for explaining a characteristic operation of the response input device 6b.

First, a CPU 31b (retrieving means, input controlling means) judges whether or not document identification data has been received from the display device 5b (Step H1). When judged at Step H1 that document identification data has not been received (NO at Step H1), the CPU 31b returns to Step H1. Then, until the reception of document identification data is detected, the CPU 31b remains in a standby mode.

Conversely, when judged that document identification data has been received from the display device 5b (YES at Step H1) , the CPU 31b proceeds to Step H2, and searches the answer choice memory M4b based on the received document information data (Step H2). Next, the CPU 31b reads out answer choice data corresponding to the document identification data, and enables switches corresponding to the answer choice data (Step H3) . For example, when the display device 5b detects the document B in FIG. 20, the CPU 31b enables two switches (a and b) among the four switches (a to d) of the response switches 36b.

When the switches corresponding to the answer choice data are enabled at Step H3, the responder responds to the question by pressing the switch corresponding to the responder's response.

When the response switch 36b is pressed, or in other words, when the response is inputted (YES at Step H4), the CPU 31b registers response data thereof (Step H5), and transmits the registered response data to the management device 7b (Step H6) . Accordingly, this processing in the third embodiment ends.

Note that, although the display device 5b and the management device 7b are separate devices in the third embodiment, the display device 5b and the management device 7b may be a single device.

Also note that, although switches are used as means for selecting a response in the third embodiment, a dial-type input section may be used instead.

## Claims

1. An input device (1, 6, 6b), comprising:
a storing means (13, 33, 33b) for storing a plurality of input control information corresponding to a plurality of display identification information respectively assigned to a plurality of display contents capable of being displayed on a display device (2, 5, 5b);
a receiving means (17, 38, 38b) for receiving display identification information of display content currently being displayed on the display device (2, 5, 5b); and
a retrieving means (11, 31, 31b) for retrieving from the storing means (13, 33, 33b) input control information corresponding to the display identification information received by the receiving means (17, 38, 38b);
an input controlling means (11, 31, 31b) for performing input control based on the input control information retrieved by the retrieving means (11, 31, 31b).

2. The input device (1, 6, 6b) according to claim 1,
wherein the input control information includes information for controlling an input screen that displays input content to be inputted in accordance with the display content to which the display identification information has been assigned; and
the input controlling means (11, 31, 31b) displays the input screen corresponding to the display identification information, and performs input control of information inputted based on the input screen.

3. The input device (1, 6, 6b) according to claim 1, further comprising:
a selecting means (36b) having a plurality of answer choices;
wherein the input control information includes information for extracting answer choices to be selected in accordance with the display content to which the display identification information has been assigned; and
the input controlling means (11, 31, 31b) controls input of any of the extracted answer choices by enabling selective input of the extracted answer choices in accordance with the display identification information.

4. The input device (1, 6, 6b) according to claim 1, further comprising:
an acquiring means (18) for acquiring input control information from an external management device; and
an updating means (11) for updating corresponding input control information in the storing means (13, 33, 33b), when the acquiring means (18) acquires the input control information.

5. The input device (1, 6, 6b) according to claim 4, wherein the updating means (11) updates the input control information in the storing means (13, 33, 33b) according to predetermined time of day.

6. The input device (1, 6, 6b) according to claim 2, further comprising a display means (14, 34) for displaying the input screen retrieved by the retrieving means (11, 31, 31b).

7. The input device (1, 6, 6b) according to claim 6, wherein the display means (14, 34) constitutes a touch screen means (14, 34) in which a touch panel is arranged to be layered on a display panel.

8. An input system having a display device (2, 5, 5b) and an input device (1, 6, 6b),
wherein the display device (2, 5, 5b) includes:
a detecting means (24, 44, 44b) for detecting display content being displayed from among a plurality of display contents; and
a transmitting means (25, 45, 45b) for transmitting display identification information identifying the display content being displayed; and
wherein the input device (1, 6, 6b) includes:
a storing means (13, 33, 33b) for storing a plurality of input control information corresponding to a plurality of display identification information respectively assigned to the plurality of display contents;
a receiving means (17, 38, 38b) for receiving the display identification information transmitted from the transmitting means (25, 45, 45b);
a retrieving means (11, 31, 31b) for retrieving from the storing means (13, 33, 33b) input control information corresponding to the display identification information received by the receiving means (17, 38, 38b); and
an input controlling means (11, 31, 31b) for performing input control based on the input control information retrieved by the retrieving means (11, 31, 31b).

9. The input system according to claim 8, wherein the detecting means (24, 44, 44b) detects a predetermined display content.

10. The input system according to claim 8,
wherein the display device (2, 5, 5b) is a book-like printed material composed of a plurality of pages;
the detecting means (24, 44, 44b) includes a magnetic sensor, a light sensor, or a touch sensor which is attached to the printed material, and detects a page to which the printed material is being opened as display content, using the magnetic sensor, the light sensor, or the touch sensor;
the storing means (13, 33, 33b) stores a plurality of input screen data, each of which is provided corresponding to each page on the display device (2, 5, 5b), and used to display corresponding content; and
the retrieving means (11, 31, 31b) retrieves input screen data corresponding to the display identification information transmitted from the display device (2, 5, 5b).

11. The input system according to claim 10,
wherein the printed material is a menu composed of a plurality of menu pages on which menu contents are written;
the detecting means (24, 44, 44b) detects a menu page being opened from among the plurality of menu pages;
the storing means (13, 33, 33b) stores a plurality of input screen data, each of which is provided corresponding to each menu page of the menu, and used to display corresponding menu content; and
the input controlling means (11, 31, 31b) switches to an input screen corresponding to the display identification information received by the receiving means (17, 38, 38b).

12. The input system according to claim 10,
wherein the printed material is a textbook composed of a plurality of pages;
the detecting means (24, 44, 44b) detects a page including a question from among the plurality of pages;
the storing means (13, 33, 33b) stores a plurality of input screen data, each of which is provided corresponding to each page of the textbook including a question, and used to display corresponding question content; and
the input controlling means (11, 31, 31b) switches to an input screen corresponding to the display identification information received by the receiving means (17, 38, 38b).

13. The input system according to claim 9,
wherein the predetermined display content is a document in which a question is written;
the detecting means (24, 44, 44b) detects the document in which the question is written;
the input device (1, 6, 6b) further includes a selecting means (36b) having a plurality of answer choices;
the input control information includes information for extracting answer choices to be selected in accordance with the question written in the display content to which the display identification information has been assigned; and
the input controlling means (11, 31, 31b) controls input of any of the extracted answer choices by enabling selective input of the extracted answer choices in accordance with the display identification information received by the receiving means (17, 38, 38b).

14. A non-transitory computer-readable storage medium having stored thereon a program that is executable by a computer, the program being executable by the computer to perform functions comprising:
a storing function for storing a plurality of input control information corresponding to a plurality of display identification information respectively assigned to a plurality of display contents capable of being displayed on a display device (2, 5, 5b);
a receiving function for receiving display identification information of display content currently being displayed on the display device (2, 5, 5b);
a retrieving function for retrieving from the storing function input control information corresponding to the display identification information received by the receiving function; and
an input controlling function for performing input control based on the input control information retrieved by the retrieving function.
